## Europäisches Patentamt
## European Patent Office
## Office européen des brevets

(19)

(11) Numéro de publication: **0 136 944**
**B1**

(12)

# FASCICULE DE BREVET EUROPEEN

(45) Date de publication du fascicule du brevet:
**31.01.90**

(21) Numéro de dépôt: **84401918.2**

(22) Date de dépôt: **26.09.84**

(51) Int. Cl.⁴: **G 01 C 21/22**

(54) **Appareil indicateur cartographiques de relief et son utilisation pour la navigation aérienne.**

(30) Priorité: **30.09.83 FR 8315656**

(43) Date de publication de la demande:
**10.04.85 Bulletin 85/15**

(45) Mention de la délivrance du brevet:
**31.01.90 Bulletin 90/5**

(84) Etats contractants désignés:
**DE GB IT**

(56) Documents cités:
**FR-A- 2 357 022**
**FR-A- 2 450 443**

(73) Titulaire: **THOMSON-CSF, 51, Esplanade du Général de Gaulle, F-92800 Puteaux (FR)**

(72) Inventeur: **Guerin, Stanislas, THOMSON-CSF SCPI 173, bld Haussmann, F-75379 Paris Cedex 08 (FR)**

(74) Mandataire: **Trocellier, Roger et al, THOMSON-CSF SCPI, F-92045 PARIS LA DEFENSE CEDEX 67 (FR)**

ACTORUM AG

## Description

L'invention conerne un appareil indicateur cartographique de relief qui permet la réalisation d'un système anti-collision du sol appelé en anglais G. CAS (Ground advisory and Collision Avoidance System). Cet appareil analyse le relief environnant l'aéronef et enregistré sur film, et présente sur indicateur cathodique ce relief d'une manière adaptée à une exploitation directe par l'équipage.

Les indicateurs cartographiques en question servent à visualiser une carte géographique mobile à bord de véhicule et sont utilisés en particulier pour la navigation aérienne. Dans ce concept, l'image de carte visualisée sur un indicateur cathodique représente souvent la zone survolée; à cette carte se rajoutent, généralement, des symboles et inscriptions relatifs à des paramètres de navigation et à la position avion. L'image visualisée doit se déplacer comme le sol sous le mobile et son positionnement doit donc être asservi en X, en Y et en θ, correspondant respectivement aux données longitude, latitude et cap de l'avion, ces données étant fournies par le système de navigation qui équipe le véhicule. L'indicateur cartographique comporte un calculateur qui élabore, à partir de ces données, des signaux de commande d'asservissement de position de l'image en X, Y et θ.

Il est connu par le document de brevet français 2 357 022, un indicateur cartographique qui comporte: la carte enregistrée sur un film photo supporté par des bobines, un lecteur vidéo d'images selon un balayage ligne par ligne, des moyens d'asservissement de l'image en fonction de la latitude, la longitude et le cap, et des circuits d'exploitation pour visualiser les signaux vidéo de lecture. Le lecteur vidéo comporte, soit une source lumineuse et une caméra de télévision, soit un tube d'analyse à spot mobile (flying-spot) et un photodétecteur (photomultiplicateur ou autre), des éléments optiques de transport d'image et de focalisation, et un générateur des signaux de balayage de la caméra ou un tube flying-spot. Dans le cas d'un film couleur, il faut rajouter un séparateur optique trichrome et trois photodétecteurs ou caméras de prise de vues au lieu d'un élément.

Des circuits de traitement des signaux vidéo de lectur peuvent être utilisés à différentes fins avant visualisation cathodique monochrome ou couleur. Le document de brevet FR-A-2 463 392 décrit une telle réalisation pour une sélection de couleurs ou un transcodage couleur, et le document de brevet FR-A-2 499 743 décrit une réalisation permettant de restituer les trois composantes couleurs à partir d'un film noir et blanc ou à deux composantes couleur. Dans chacune d'elles, le traitement utilise une mémoire morte programmée (ou PROM) pour faire correspondre la valeur d'entrée, ou point analysé, à une valeur transcodée de sortie destinée à la visualisation selon une table prédéterminée.

Le document de bevet français n° 83 01 068 du 25.01.83 a trait à une structure de ce genre où le film est un levé d'altitude et la mémoire permet de restituer la valeur d'altitude du point analysé. Le levé est enregistré sur le film sous la forme d'une pluralité de teintes correspondant à différentes tranches d'altitude. Après la lecture sur le film des teintes des points successifs du parcours suivi, on fait correspondre à chacune d'elles l'altitude correspondante qui est alors visualisée sur l'indicateur cathodique. On obtient une courbe des variations d'altitude selon une coupe déterminée du terrain. Plusieurs courbes visualisées simultanément et correspondant à des plans de coupe parallèles à différentes distances d'éloignement peuvent donner à l'utilisateur un aperçu de la perspective du terrain qu'il va survoler. Dans ce document on prévoit également de tenir compte de l'altitude instantanée de l'aéronef pour rendre cette visualisation plus réelle, mais pas de la différence d'altitude entre l'aéronef et le point du sol qu'il survole. Or cette dernière information s'avère très utile lorsque les conditions de visibilité sont mauvaises, et peut, le cas échéant, permette d'éviter des collisions avec le sol.

Le but de l'invention est d'agencer un tel appareil pour remédier à ces inconvénients et de visualiser de façon précise l'éloignement du relief de la zone survolée en fonction d'altitude de l'aéronef.

Un objet de l'invention est d'utiliser un levé d'altitude d'une zone à survoler, d'en effectuer la lecture vidéo, de comparer les valeurs successives d'altitude lues avec celle instantanée de l'aéronef et de visualiser en couleurs le résultat par une représentation conventionnelle.

Selon l'invention il est proposé un appareil indicateur cartographique de relief pour aéronef, utilisant des données enregistrées sur un film photographique et correspondant à des levés d'altitude codées selon une pluralité de teintes prédéterminées afin de couvrir une gamme totale d'altitude avec une précision désirée, comportant des moyens pour déterminer une zone à analyser sur le film en correspondance avec la région survolée par l'aéronef, un dispositif d'analyse point par point du film délivrant des signaux vidéo, un circuit de traitement pour décoder ces signaux en temps réel en identifiant la teinte de chaque point en lui faisant correspondre son altitude, un dispositif de visualisation pour visualiser les signaux traités sous forme d'une carte sur un écran cathodique et des moyens de commande pour élaborer des différents signaux de synchronisation et de commande et recevant d'un altimètre annexe l'information d'altitude de l'appareil, l'appareil étant caractérisé en ce que les moyens de commande élaborent une pluralité de n valeurs plus faibles que l'altitude de l'appareil et partagent ladite altitude en $n+1$ plages chacune de largeur prédéterminée, ledit circuit de traitement comportant, en outre, une pluralité n de comparateurs pour comparer l'altitude du point analysé aux dites n valeurs et déterminer dans quelle plage se situe ledit point, un transcodeur qui reçoit le résultat de comparaison et fait correspondre à chacune des plages une information de couleur distincte destinée à la visualisation.

Les particularités et avantages de l'invention apparaîtront dans la description qui suit, donnée à titre d'exemple non limitatif, et illustrée par des figures annexées qui représentent:

Fig. 1, un schéma relatif au principe utilisé dans l'appareil indicateur selon l'invention;

Fig. 2, un diagramme d'un mode de réalisation d'un appareil indicateur selon l'invention;

Fig. 3, un schéma relatif au balayage de lecture opéré sur le film;

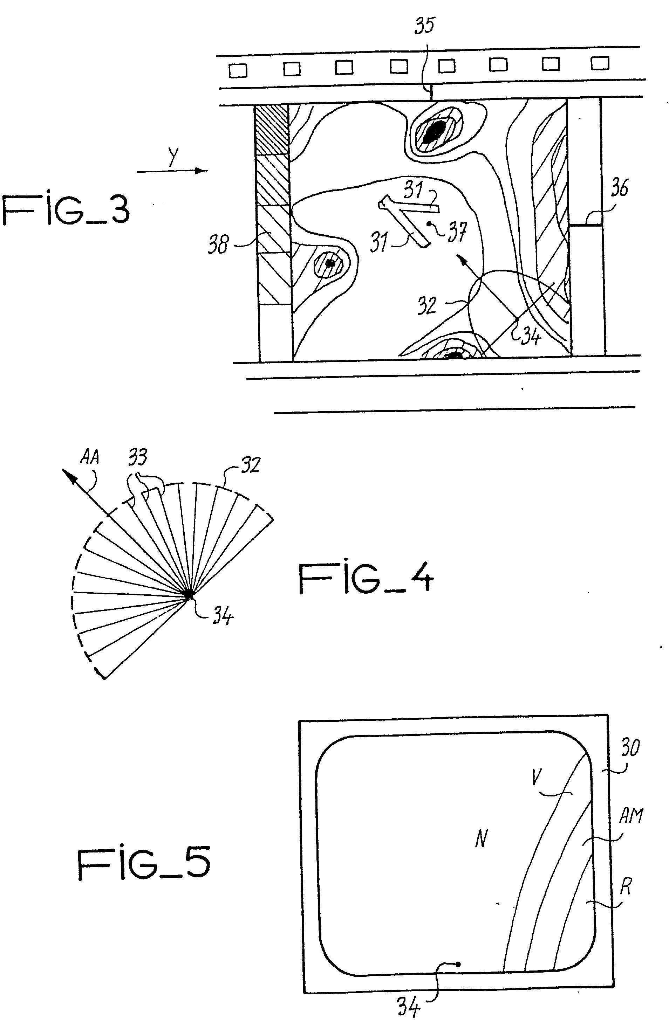

Fig, 4, un détail relatif au type de balayage de lecture de la Fig. 3;

Fig. 5, une image visualisée et correspondante au balayage représenté sur la Fig. 3;

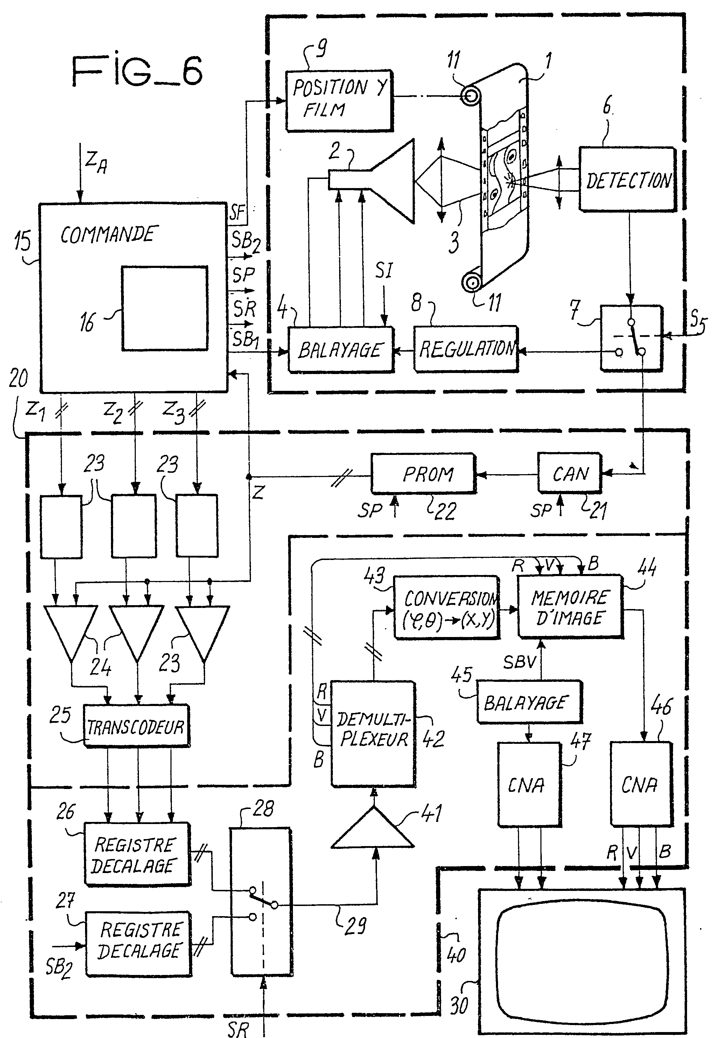

Fig. 6, un diagramme détaillé d'un mode préféré de réalisation d'un appareil selon l'invention.

La description de l'appareil indicateur cartographique selon l'invention est faite, dans ce qui suit, dans le cadre d'une utilisation plus particulièrement envisagée pour la navigation aérienne. L'appareil est installé à bord d'un aéronef conjointement avec d'autres instruments et appareils de bord, tels que, altimètre, calculateur de bord ...

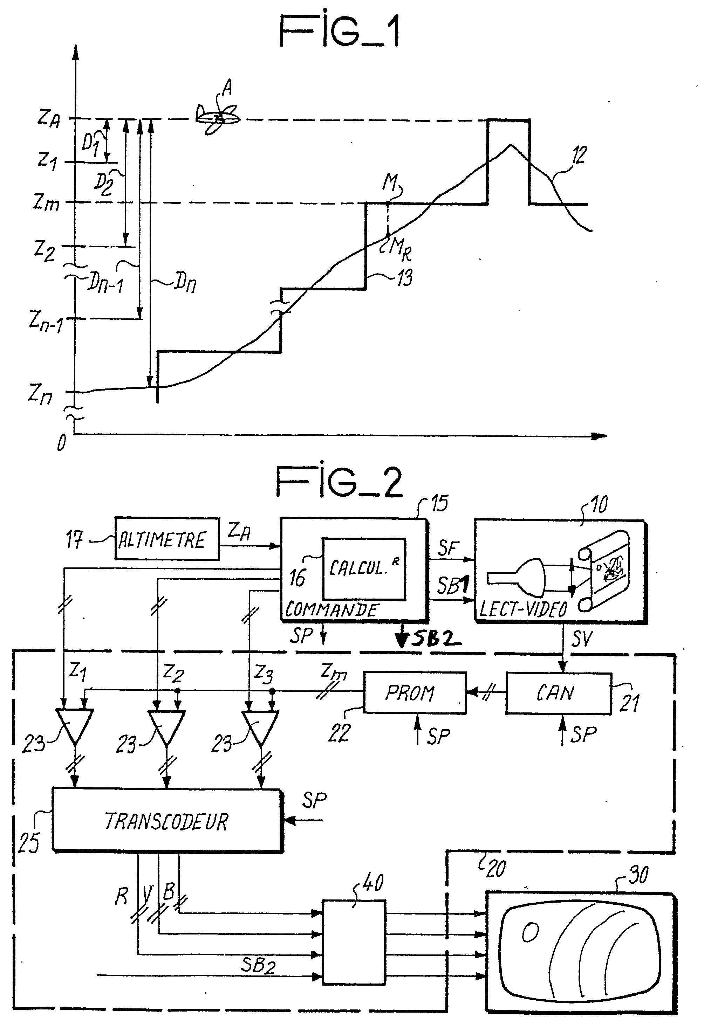

La Fig. 1 permet de comprendre plus aisément le principe de l'invention. Un aéronef A survole à une altitude $Z_A$ une région. La courbe 12 représente les variations réelles d'altitude du sol le long de la trajectoire de l'aéronef. La courbe en créneaux 13 représente les variations des valeurs lues, par un lecteur vidéo sur un levé d'altitude de la région survolée le long de la même trajectoire. Les créneaux correspondent aux différentes tranches d'altitude du codage du film. Le point M du film correspond au point réel $M_R$ sur le sol et l'altitude correspondante lue sur le film est $Z_M$ sur l'axe OZ figurent différentes altitudes $Z_1$, $Z_2$, . . .$Z_n$. Celles-ci se situant par rapport à $Z_A$, différentes distances $D_1$, $D_2$,. . .$D_n$ d'éloignement par rapport à l'aéronef. Pour l'utilisation aéroportée, ces altitudes peuvent être définies par exemple de la manière suivante:

$$Z_1 = Z_A - 30 \text{ mètres}$$
$$Z_2 = Z_A - 90 \text{ mètres}$$
$$Z_3 = Z_A - 150 \text{ mètres}$$

correspondant à trois distances d'éloignement de 30, 90 et 150 mètres. Ces trois valeurs définissent quatres plages d'altitude de largeur déterminée qui sont: les altitudes inférieures à $Z_1$; les altitudes comprises entre $Z_1$ et $Z_2$; et les altitudes comprises entre $Z_2$ et $Z_3$; les altitudes supérieures à $Z_3$. A chacune de ces quatre plages d'altitudes est affectée une teinte de visualisation, par exemple: noir, vert, ambre et rouge.

L'utilisation d'un film couleur permettant de disposer d'un très grand nombre de teintes n'est pas nécessaire et s'avère très onéreuse. Pour ces raisons, l'appareil indicateur cartographique utilise un film photographique 1 considéré de type monochrome noir et blanc, c'est-à-dire sur lequel sont enregistrées des données topographiques.

Chaque photographie du film est constituée par un levé précis d'altitude d'une région. Les altitudes se trouvent stockées selon différents niveaux de gris qui sont prédéterminés en relation avec les différentes tranches d'altitude à traduire. Chaque tranche d'altitude, correspondant à un créneau de la fig. 1, est affectée à une valeur de densité déterminée du film, c'est-à-dire à un certain niveau de gris dans une gamme, s'étendant de préférence du noir au blanc. Cette région est de préférence la portion de territoire dont le survol en certains points est dangereux, en particulier c'est le cas d'un aérodrome d'accès difficile ou délicat.

En se reportant à la Fig. 2, l'appareil indicateur comporte essentiellement un lecteur vidéo 10 du film 1, des moyens de commande 15, un circuit de traitement 20 et un dispositif de visualisation cathodique 30. Le fonctionnement du lecteur vidéo sera succinctement rappelé ultérieurement.

Un signal vidéo SV est délivré par le lecteur vidéo 10 et est appliqué à l'entrée du circuit de traitement dans un convertisseur analogique-numérique 21. Par l'intermédiaire de la mémoire morte programmable 22 on associe à chacune des valeurs analysées une valeur numérique $Z_M$ correspondante d'altitude.

Selon l'invention on applique cette valeur $Z_M$ à l'entrée d'un nombre n de comparateurs 23 à entrées et sorties numériques. Les n comparateurs définissent n + 1 plages d'altitude. Les différentes valeurs de seuil correspondant aux niveaux $Z_1$, $Z_2$. . .,$Z_n$ sont calculées par un calculateur 16, faisant partie des moyens de commande, en fonction de l'altitude instantanée $Z_A$ de l'aéronef fournie par un altimètre annexe 17.

Le résultat de chacune de ces comparaisons est donné sous forme numérique et est transmis à un transcodeur 24. La combinaison des n résultats est particulière à la plage relative d'altitude définie par rapport à l'aéronef dans laquelle se trouve le point analysé à cet instant précis. Le transcodeur fait correspondre à chaque combinaison la teinte de visualisation caractéristique de la plage relative d'altitude du point considéré. Les sorties numériques correspondantes traduisent les trois composantes chromatiques rouge R, verte V et bleue B pour chacune de ses teintes et sont transmises à travers un circuit de sortie 40 pour pouvoir être ensuite appliqués à un dispositif de visualisation cathodique couleur.

Le circuit de sortie délivre en outre les signaux de balayage au dispositif de visualisation 30, à partir de données $SB_2$ élaborées par les moyens de commande 15. Ce circuit sera décrit ultérieurement de façon plus précise dans le cadre du mode préféré de réalisation.

Les moyens de commande 15 élaborent les différents signaux de commande et de synchronisation nécessaires au fonctionnement de l'ensemble. Ces signaux comprennent des signaux de commande du balayage $SB_1$ de lecture appliqués au lecteur vidéo 10, et ceux $SB_2$ appliqués au circuit de sortie 40, un signal SP ou synchronisation point par point des valeurs analysées et des signaux SF de commande de positionnement du film.

La photographie du film représentée sur la Fig. 3 est par exemple un levé d'altitude des abords d'un aérodrome, schématisé par deux pistes 31, dont l'approche aérienne est difficile ou dangereuse. On distingue les courbes de niveau qui délimitent les différents niveaux de gris relatifs aux tranches d'altitude. Le balayage du lecteur vidéo 10, illustré plus en détail sur la Fig. 4, est du type radial limité à un secteur, par exemple un demi-cercle 32, avec un nombre déterminé de radiales 33. Le centre de balayage 34 représente la position instantanée de l'aéronef. L'orientation de balayage est asservie à l'axe longitudinal AA de l'aéronef ou à une autre référence telle que son cap ou la route à suivre.

La Fig. 5 représente l'image vue sur l'écran du dispositif de visualisation 30 en relation avec le balayage effectué sur la Fig. 3, c'est-à-dire que les quatre zones représentées sont en relation directe avec celles recouvertes par le balayage 32. Sont par exemple visualisées en rouge, toutes les parties R de la zone dont l'altitude est supérieure à l'altitude de l'aéronef diminuée de trente mètres, le survol de telles zones est interdit. Les zones AM dont les altitudes sont comprises entre trente et quatre-vingt dix mètres en-dessous de l'aéronef sont visualisées en ambre, le survol de telles zones est garanti mais interdit. Entre quatre-vingt dix et cent cinquante mètres en-dessous de l'aéronef, les zones V sont visualisées en vert et leur survol est déconseillé. Enfin au-delà de cent cinquante mètres en de-dessous de l'aéronef les zones N apparaissent en noir et peuvent être survolées.

En se reportant à la Fig. 6, le lecteur vidéo 10 comprend essentiellement, afin d'analyser le film 1, un tube d'analyse 2 à spot mobile et ses circuits d'alimentation et de balayage 4. Le lecteur vidéo comprend également un dispositif photodétecteur 6 délivrant un signal vidéo SV. Un dispositif commutateur 7 commandé par une synchronisation d'image SI permet le branchement d'une boucle de régulation 8 de l'intensité de la source lumineuse constituée par le spot du tube d'analyse 2. Un circuit d'asservissement 9 commandé par les signaux SF permet le positionnement vertical approximatif du film 1 supporté par des bobines 11.

Sur deux bords perpendiculaires de l'image (Fig. 3) sont placés respectivement deux index 35 et 36. Ils servent, ainsi que les moyens de commande 15 et les circuits d'alimentation et de balayage 4, au positionnement précis du spot sur le film. Les cotes des deux index correspondent aux coordonnées d'un point particulier 37 de l'image. Un positionnement précis du spot revient à effectuer le repérage fin ($\pm$ 10 micromètres) de la position du film qui est réalisé de la manière suivante.

Dans la programmation du calculateur il est prévu, avant la lecture d'une image du film d'effectuer le balayage à vitesse lente des deux bords d'image sur lesquels se trouvent les index 35 et 36. Ces derniers sont, en outre, caractérisés par une teinte particulière différente de celles utilisées dans l'image, une bonne finesse et un excellent contraste. Par ailleurs, la sortie de la mémoire programmable 22 est connectée aux moyens de commande. Lorsque l'un des index est balayé, le calculateur identifie la valeur particulière à la teinte de l'index. Connaissant l'origine et la vitesse de balayage, le calculateur évalue le temps de balayage jusqu'à l'index et en déduit la cote précise de ce dernier. Lorsque les deux index ont été balayés le calculateur connaît la position précise du point 37 de l'image. Dans la mémoire du calculateur sont stockées la latitude et la longitude du point réel correspondant au point 37, défini par les index de l'image concernée et l'échelle de l'image. Le calculateur 16 compare alors les coordonnées de latitude et de longitude mesurées aux valeurs réelles du point particulier qui sont stockées auparavant. Ces valeurs réelles et le cap sont communiquées par des appareils annexes aux moyens de commande qui élaborent ensuite les signaux de balayage de lecture $SB_1$ en fonction des coordonnées de longitude et de latitude et des différences mesurées. La latitude et la longitude de l'aéronef étant connues à chaque instant, le point avion se trouve systématiquement positionné par rapport à l'image à balayer. Aucun déplacement du film n'est prévu et l'utilisation d'asservissement mécanique précis est ainsi évité.

Le long d'un autre bord de chaque image une bande de calibrage 38, constituée de zones successives correspondant respectivement aux différentes teintes utilisées sur l'image permet de réguler l'intensité du spot du tube de lecture 2. Avant d'analyser le film la programmation des moyens de commande 15 prévoit également de balayer cette zone afin de calibrer l'intensité du spot grâce à la bouche de régulation 7–8.

Dans le mode préféré de réalisation de la Fig. 6 le balayage de lecture est radial centrifuge et la période de balayage d'image est très grande (de l'ordre de la seconde) pour obtenir un résultat très précis.

Par ailleurs, la visualisation exige une fréquence image de l'ordre de vingt-cinq à trente images par seconde, et une représentation d'image selon un balayage radial pose des problèmes de luminosité (forte luminance au centre de balayage, faible luminance aux extrémités des radiales). Pour ces raisons on procède selon un balayage ligne par ligne, vertical.

De plus, dans le but de donner à l'invention la plus large application possible on élabore de façon préférentielle la sortie vidéo 29 conforme à la norme SAI ARINC 708 du radar météo.

On a retenu un mode de balayage de lecture également conforme au balayage du radar météo décrit dans la norme précitée. C'est un balayage centrifuge couvrant mille cinq cent radiales de 512 points chacune, le champ couvert étant de cent quatre vingts degrés et décrit précédemment à l'aide de la Fig. 4.

En revenant à la Fig. 6, la sortie numérique du transcodeur 25 peut ne comporter par exemple que trois bits pour pouvoir former huit combinaisons distinctes correspondant à huit couleurs différentes de visualisation. Chaque combinaison transcodée est transférée en parallèle dans un registre à décalage 26 dont la lecture s'effectue en série. Un deuxième registre à décalage 27 stocke les données $SB_2$ nécessaires pour mettre en mémoire les données de visualisation. Ces données $SB_2$ sont, dans le cas de la norme précitée, le numéro d'ordre de la radiale balayée pour une image, des données de prise en charge, l'échelle du balayage, l'angle de balayage et une synchronisation de radiale. La sortie de chacun de ces deux registres est connectée à un sélecteur 28 commandé par une synchronisation de radiale SR élaborée par les moyens de commande 15 qui permet, par multiplexage, de véhiculer par un bus 29 successivement, pendant les retours ligne du balayage les informations d'identification de radiales, et pendant le balayage ligne les valeurs codées sur trois bits des points de la radiale.

Le circuit de sortie est celui utilisé pour la visualisation d'un radar météo et comprend principalement un amplificateur 41, un démultiplexeur 42, un circuit opérateur de conversion 43 des coordonnées polaires en cartésiennes, une mémoire d'image 44, un générateur de balayage vertical ligne par ligne 45 et des convertisseurs numérique-analogique 46, 47. Le démultiplexeur oriente les données concernant la synchronisation et les données concernant les radiales vers le circuit opérateur de conversion 43, dont les sorties sont appliquées aux entrées d'adressage de la mémoire d'image. Le démultiplexeur applique aux entrées de données de la mémoire d'image les informations successives de teintes R, V, B de chacun des points de la radiale. Une synchronisation de balayage SBV propre à la visualisation est utilisée pour la lecture de la mémoire d'image 44. De ce fait, chaque point d'une même image peut rester dans cette mémoire et être visualisé plusieurs fois pendant une période d'écriture qui est de une ou plusieurs secondes, en attendant que le point correspondant de l'image suivante soit analysé et stocké. La mémoire se modifie progressivement mais son contenu est lu au rythme de la synchronisation SBV du balayage de visualisation.

La longueur des radiales 33, peut être choisie parmi plusieurs valeurs, par exemple quinze, trente et soixante milles nautiques.

Le transcodeur 25 peut être réalisé par une mémoire morte programmable.

Le nombre des couleurs de visualisation n'est pas limité à quatre, de même que les tranches d'altitude ne sont pas limitées aux trois valeurs considérées à titre d'exemple.

L'utilisation d'un film en couleurs est également envisagée, ceci pour permettre, le cas échéant, de stocker un nombre élevé de valeurs qu'il serait trop difficile d'enregistrer sur un film noir et blanc. Dans ce cas on utilise un séparateur trichrome et trois photodétecteurs pour délivrer trois signaux vidéo au circuit de traitement, et le dispositif commutateur 7 est triple. On prévoit un convertisseur analogique-numérique pour chacun des signaux.

## Revendications

1. Appareil indicateur cartographique de relief pour aéronef, utilisant des données enregistrées sur un film photographique (1) et correspondant à des levés d'altitude codées selon une pluralité de teintes prédéterminées afin de couvrir une gamme totale d'altitude avec une précision désirée, comportant des moyens (9) pour déterminer une zone à analyser sur le film (1) en correspondance avec la région survolée par l'aéronef, un dispositif d'analyse point par point du film délivrant des signaux vidéo, un circuit de traitement (20) pour décoder ces signaux en temps réel, en identifiant la teinte de chaque point et en lui faisant correspondre son altitude, un dispositif de visualisation (30) pour visualiser les signaux traités sous forme d'une carte sur un écran cathodique et des moyens de commande (15) pour élaborer des différents signaux de synchronisation et de commande et recevant d'un altimètre (17) annexe l'information d'altitude de l'appareil, l'appareil étant caractérisé en ce que les moyens de commande (15) élaborent une pluralité de n valeurs ($Z_1$, $Z_2$,...$Z_n$) plus faibles que l'altitude de l'appareil ($Z_A$) et partageant ladite altitude en n + 1 plages chacune de largeur prédéterminée, ledit circuit de traitement (20) comportant, en outre, une pluralité n de comparateurs (23) pour comparer l'altitude du point analysé auxdites n valeurs et déterminer dans quelle plage se situe ledit point, un transcodeur (25) qui reçoit le résultat de comparaison et fait correspondre à chacune des plages une information de couleur distincte destinée à la visualisation.

2. Appareil indicateur selon la revendication 1 dont le circuit de traitement comporte une première mémoire morte programmable (22) pour effectuer la correspondance entre la teinte de chaque point et son altitude, caractérisé en ce que les comparateurs (23) sont des comparateurs numériques et en ce que le transcodeur (25) est une deuxième mémoire morte programmable.

3. Appareil indicateur selon la revendication 1 ou 2, dont le dispositif d'analyse (10) est un tube cathodique, caractérisé en ce que le balayage dudit tube (2) est un balayage radial centrifuge d'un nombre déterminé de radiales et centré en un point (34) du film (1) correspondant à la position de l'appareil indicateur.

4. Appareil indicateur selon la revendication 3, caractérisé en ce que ledit dispositif de visualisation (30) procède selon un balayage ligne par ligne vertical, en ce que le circuit de traitement (20) comporte un circuit de sortie (40) comprenant, un premier registre à décalage (26) qui reçoit du transcodeur (25), l'information de couleur sur un nombre déterminé de bits, un deuxième registre à décalage (27) qui reçoit des signaux de balayage de visualisation ($SB_2$) issus de moyens de commande (15), comprenant des informations numériques d'identification de radiale, un sélecteur (28) commandé par une synchronisation de radiale (SR) élaborée par les moyens de commande, recevant sur deux bornes d'entrée respectivement les deux sorties desdits registres et délivrant sur un bus (29) lesdites informations numériques relatives à une radiale, suivies des informations successives de couleurs relatives aux différents points de cette radiale en vue d'élaborer des signaux de balayage et des signaux de chrominance pour les appliquer au dispositif de visualisation (30).

5. Appareil indicateur selon la revendication 2 seule ou combinée avec l'une quelconque des revendications 3, ou 4, dont les moyens de commande possèdent un calculateur, caractérisé en ce que des moyens de positionnement précis du film sont prévus et sont constitués par deux index (35, 36) placés sur deux bords perpendiculaires de chaque image du film (1) de façon à matérialiser les coordonnées d'un point particulier de l'image, les moyens de commande (15) disposent des coordonnées réelles dudit point particulier et de la position instantanée de l'appareil, commandant le balayage à vitesse lente déterminée desdits index, recevant la sortie de ladite première mémoire (22) pour recevoir une information relative au balayage effectif des index et déterminer par le calculateur (16) leur position exacte afin de caler le balayage de façon précise par rapport audit point particulier.

6. Appareil indicateur selon l'une quelconque des revendications précédentes, utilisé à bord d'un aéronef pour visualiser le relief du terrain survolé ou à survoler en fonction de l'altitude de l'aéronef, caractérisé en ce que chacune des photographies du film est un levé d'altitude d'une région dont le survol est dangereux.

7. Appareil indicateur selon la revendication 6, caractérisé en ce que ladite région est un aérodrome et ses environs.

**Claims**

1. A cartographic relief indicating apparatus for an aircraft using data recorded on a photographic film (1) and corresponding to altitude takings coded according to a plurality of predetermined colours so as to cover a total scale of altitudes with the desired precision, the apparatus comprising means (9) for determining a zone to be analyzed on the film (1) in correspondence with the area flown over by the aircraft, a device for analyzing the film point by point and for delivering video signals, a processing circuit (20) for real time decoding of the signals by way of identification of the colour of each point and for attributing its altitude thereto, a visualization device (30) for displaying the processed signals in the form of a map on a cathode ray tube screen, and control means (15) for elaborating various synchronization and control signals and for receiving altitude information of the apparatus from and associated altimeter (17), characterized in that the control means (15) elaborate a plurality of n values ($Z_1$, $Z_2$ ... $Z_n$) which are smaller than the altitude of the apparatus ($Z_A$) and subdivide said altitude into n + 1 ranges each having a predetermined width, said processing circuit (20) further comprising a plurality of n comparators (23) for comparing the altitude of the analyzed point with said n values and for determining the range wherein said point is located, and comprising a transcoder (25), which receives the result of comparison and makes a distinct colour information correspond to each of the ranges, in view of visualization.

2. An indicating apparatus according to claim 1, whose processing circuit comprises a first programmable read only memory (22) for implementing the correspondance to exist between the colour of each point and its altitude, characterized in that the comparators (23) are digital comparators, and that the transcoder (25) is a second programmable read only memory.

3. An indicating apparatus according to claims 1 to 2, whose analysis device (10) is a cathode ray tube, characterized in that the scanning of said tube (2) is a radial centrifugal scanning of a predetermined number of radial beams and is centered upon a point (34) of the film (1) that corresponds to the position of the indicating apparatus.

4. An indicating apparatus according to claim 3, characterized in that said visualization device (30) procedes by way of a line by line vertical scanning, that the processing circuit (20) comprises an output circuit (40) which includes a first shift register (26) receiving colour information on a predetermined number of bits from the transcoder. (25), a second shift register (27) receiving visualization scanning signals ($SB_2$) issued by the control means (15) and including digital signals for identifying radial beams, a selector (28) controlled by a radial beam synchronization (SR) elaborated by the control means, which receive on two input terminals respectively the two output signals of said registers, and which deliver to a bus (29) said digital information concerning a radial beam, followed by successive colour information concerning the different points of this radial beam, in view of the elaboration of scan signals and chrominance signals to be applied to the visualization device (30).

5. An indicating apparatus according to claim 2 alone or according to a combination with either claim 3 or else claim 4, whose control means include a computer, characterized in that means are provided for precisely positioning the film, said means being constituted by two marks (35, 36) placed on two perpendicular borders of each picture of the film (1), so as to materialize the coordinates of a particular point of the picture, said control means (15), disposing of the real coordinates of said particular point and of the instantaneous position of the apparatus, controlling the scanning of said marks at a predetermined low speed, receiving the output signal of said first memory unit (22) in order to receive an information relative to the effective scanning of the marks and to determine by the computer (16) their precise position, so as to lock the scanning in a precise manner relative to said particular point.

6. An indicating apparatus according to anyone of the preceding claims, used on board of an aircraft for visualizing the relief of the ground flown over or to be flown over in accordance with the altitude of the aircraft, characterized in that each of the photographs of the film is the altitude taking of an area which is dangerous to be flown over.

7. An indicating apparatus according to the claim 6, characterized in that said area is an airport and its environment.

**Patentansprüche**

1. Kartographisches Reliefanzeigegerät für Luftfahrzeuge, das auf einem photographischen Film (1) aufgezeichnete Daten verwendet, welche Höhenerfassungen entsprechen, die gemäß einer Vielzahl vorherbestimmter Farbtöne kodiert sind, um die gesamte Höhenskala mit der gewünschten Genauigkeit abzudecken, wobei das Gerät Mittel (9) zum Bestimmen einer zu analysierenden Zone auf dem Film (1) entsprechend der vom Luftfahrzeug überflogenen Gegend, eine Vorrichtung zur punktweisen Analyse des Films und Lieferung eines Videosignals, eine Verarbeitungsschaltung (20) zum Dekodieren dieser Signale in Echtzeit, indem der Farbton jedes Punktes identifiziert wird und ihm seine Höhe zugeordnet wird, eine Anzeigevorrichtung (30) zum Wiedergeben der behandelten Signale in Form einer Karte auf dem Bildschirm einer Kathodenstrahlröhre, und Steuermittel (15) zum Erzeugen der verschiedenen Synchronisierungs- und Steuersignale sowie zum Empfang der Höheninformation des Gerätes von einem beigefügten Höhenmesser (17) aufweist, dadurch gekennzeichnet, daß die Steuermittel (15) eine Vielzahl von n Werten ($Z_1$, $Z_2$ ... $Z_n$) erzeugt, die kleiner als die Höhe des Gerätes ($Z_A$) sind und diese Höhe in n + 1 Bereiche von jeweils vorherbestimmter Breite aufteilen, wobei die Verarbeitungsschaltung (20) weiter eine Vielzahl von n Komponenten (23) zum Vergleichen der Höhe des analysierten Punktes mit den n Werten und zum Bestimmen des Bereiches, in welchem der Punkt liegt, sowie einen Umkodierer (25) aufweist, der das Vergleichungsergebnis empfängt und jedem Bereich eine bestimmte Farbinformation für die Wiedergabe zuweist.

2. Anzeigegerät nach Anspruch 1, dessen Verarbeitungsschaltung einen ersten programmierbaren Festspeicher (22), in dem eine Korrespondenz zwischen dem Farbton jedes Punktes und seiner Höhe hergestellt wird, dadurch gekennzeichnet, daß die Komparatoren (23) digitale Komparatoren sind und der Umkodierer (25) ein zweiter programmierbarer Festspeicher ist.

3. Anzeigegerät nach Anspruch 1 oder 2, dessen Analysevorrichtung (10) eine Kathodenstrahlröhre ist, dadurch gekennzeichnet, daß die Abtastung der Röhre (2) eine radial-zentrifugale Abtastung einer bestimmten Anzahl von Radialstrahlen ist und auf einen Punkt (34) des Films (1) zentriert ist, der der Position des Anzeigegerätes entspricht.

4. Anzeigegerät nach Anspruch 3, dadurch gekennzeichnet, daß die Wiedergabevorrichtung (30) mit zeilenweiser Vertikalabtastung arbeitet, daß die Verarbeitungsschaltung (20) einen Ausgangskreis (40) besitzt, der ein erstes Schieberegister (26), welches vom Umkodierer (25) die Farbinformation über eine bestimmte Anzahl von Bits empfängt, ein zweites Schieberegister (2), welches von den Steuermitteln (15) kommende Abtastsignale ($SB_2$) für die Wiedergabe zusammen mit digitalen Informationen zu Identifikation des Radialstrahls umfaßt, einen von einer Radialstrahl-Synchronisation (SR), die von den Steuermitteln erzeugt wird, gesteuerten Wähler (28), welcher an zwei Eingangsklemmen die Ausgangssignale der Register empfängt und die einen Radialstrahl betreffenden digitalen Informationen, gefolgt von anschließenden Farbinformationen über die verschiedenen Punkte dieses Funkstrahls an eine Schiene (29) liefert, so daß Abtastsignale und Farbsignale erzeugt und an die Wiedergabevorrichtung (30) weitergegeben werden können.

5. Anzeigegerät nach Anspruch 2 alleine oder in Kombination mit einem beliebigen der Ansprüche 3 oder 4, dessen Steuermittel einen Rechner aufweisen, dadurch gekennzeichnet, daß Mittel zur genauen Positionierung des Filmes vorgesehen sind und aus zwei auf den beiden senkrechten Rändern jedes Bildes des Films (1) angebrachten Indices (35, 36) bestehen, derart, daß sie die Koordinaten eines besonderen Bildpunktes ausdrücken, wobei die Steuermittel (15), die über die wirklichen Koordinaten dieses besonderen Punktes und der momentanen Position des Gerätes verfügen, die Abtastung der Indices bei einer bestimmten langsamen Geschwindigkeit steuern, das Ausgangssignal des ersten Speichers (22) empfangen, um eine Information über die effektive Abtastung der Indices zu erhalten und durch den Rechner (16) die genaue Position bestimmen zu lassen, so daß die Abtastung genau in Bezug auf den besonderen Punkt eingestellt werden kann.

6. Anzeigegerät nach einem der vorhergehenden Ansprüche, das an Bord eines Luftfahrzeuges zur Wiedergabe des überflogenen oder zu überfliegenden Geländereliefs in Abhängigkeit von der Flughöhe des Luftfahrzeuges verwendet wird, dadurch gekennzeichnet, daß jedes der Bilder des Films eine Höhenerfassung einer Region ist, deren Überfliegen gefährlich ist.

7. Anzeigegerät nach Anspruch 6, dadurch gekennzeichnet, daß die Region ein Flughafen und seine Umgebung ist.

# FIG_1

# FIG_2

35

FIG_3

Y →

31
31    37
38
32
34
36

FIG_4

AA    33    32

34

FIG_5

30
V
N
AM
R

34

11

# FiG_6

**9** POSITION Y FILM

**11** **1**

**6** DETECTION

**2**

**3**

**SI**

$Z_A$

**15** COMMANDE

**16**

**20**

SF
$SB_2$
SP
SR
$SB_1$

**4** BALAYAGE

**8** REGULATION

**7**

**$S_5$**

**11**

$Z_1$  $Z_2$  $Z_3$

**23**  **23**

Z

PROM **22**

CAN **21**

SP ↑  SP ↑

**43** CONVERSION $(\ell, \theta) \rightarrow (X, Y)$

R V B **44** MEMOIRE D'IMAGE

**24**  **23**

**25** TRANSCODEUR

R
V
B

DEMULTI-PLEXEUR **42**

**45** BALAYAGE

SBV

**46**

**26** REGISTRE DECALAGE

**28**

**41**

**47** CNA

CNA

**27** REGISTRE DECALAGE

$SB_2$

**29**

**40**

**30**

R V B

SR